# EUROPÄISCHE PATENTSCHRIFT

(11) **EP 0 580 984 B1**
(45) Veröffentlichungstag und Bekanntmachung des Hinweises auf die Patenterteilung: **13.12.1995**
(21) Anmeldenummer: 93108552.6
(22) Anmeldetag: 27.05.1993
(51) Int. Cl.: B29C 47/08, B29C 47/12

(54) **Vorrichtung zum Herstellen eines Kunststoff-Rohres mit Querprofilierung**
Apparatus for producing a corrugated plastic pipe
Dispositif pour la fabrication d'un tuyau à parois ondulées

(30) Priorität: 24.07.1992 DE 4224514
(43) Veröffentlichungstag der Anmeldung: 02.02.1994
(73) Patentinhaber: Hegler, Wilhelm, D-97688 Bad Kissingen (DE)
(72) Erfinder: Hegler, Ralph-Peter, Dr., W-8730 Bad Kissingen (DE); Hegler, Wilhelm, W-8730 Bad Kissingen (DE)
(74) Vertreter: Rau, Manfred, Dr. Dipl.-Ing.

(56) Entgegenhaltungen:
- EP-A- 0 026 828
- EP-A- 0 087 854
- EP-A- 0 240 838
- EP-A- 0 301 189
- DE-A- 922 241

## Beschreibung

Die Erfindung betrifft eine Vorrichtung nach dem Oberbegriff des Anspruches 1.

Bei einer derartigen aus der EP 0 301 189 A2 (entsprechend US-Patent 4 900 503) bekannten Vorrichtung sind die in einer endlosen Reihe hintereinander angeordneten Halbkokillen mittels Laschen zu einer Kette miteinander verbunden. Ein Antriebsritzel greift am Beginn der Formstrecke jeweils in eine auf der Oberseite der Halbkokillen angebrachte Verzahnung ein, wobei das Antriebsritzel gleichzeitig jeweils die paarweise einander zugeordneten Halbkokillen antreibt. Vor der Formstrecke ist ein Spritzkopf eines Extruders angeordnet, der einen warmplastischen Schlauch aus Kunststoff in den Formraum spritzt, wo er zwischen einem Kalibrierdorn und in den Halbkokillen ausgebildeten Formausnehmungen zu einem Rohr mit Querprofilierung, beispielsweise Rippen, verformt wird. Die Formausnehmungen werden über in den Halbkokillen ausgebildete Vakuumkanäle mit Unterdruck beaufschlagt. Sie sind über im Maschinentisch ausgebildete Vakuumanschlüsse mit einer Vakuumquelle verbunden. Die Führungseinrichtungen zum Zusammenpressen der Halbkokillen in der Formstrecke weisen beiderseits der Formstrecke angeordnete Führungsleisten auf, an denen Führungsrollen drehbar gelagert sind, die wiederum gegen die Außenseiten der Halbkokillen anliegen. Eine Führungsleiste ist fest am Maschinentisch angebracht, während die andere Führungsleiste mittels Federn gegen die die Formstrecke durchlaufenden Halbkokillen gedrückt wird. Dies ist erforderlich, damit die paarweise aneinanderliegenden Halbkokillen tatsächlich auch dicht aneinanderliegen. Diese grundsätzliche Ausgestaltung der Vorrichtung ist bereits seit langem aus der DE 20 61 027 C3 (entsprechend US-Patent 3 776 679) bekannt.

Durch Schwankungen in der Förderleistung des Extruders, durch Viskositätsänderungen des Kunststoffes aufgrund von Temperaturschwankungen im Extruder oder aufgrund schwankender Abkühlverhältnisse in der Formstrecke und aufgrund stark wechselnder für die Herstellung des Rohres erforderlicher Kunststoffmengen über einen Längenabschnitt des Kunststoffrohres, beispielsweise beim Ausformen einer Rippe oder beim Ausformen von glattwandigen aber sehr dickwandigen Muffen oder Spitzenden treten erhebliche Druckänderungen zwischen dem Kalibrierdorn und den Halbkokillen auf. Diese Druckschwankungen können von den erwähnten Federn, die üblicherweise als Pakete von vorgespannten Tellerfedern ausgebildet sind, nicht aufgenommen werden.

Um diesem Problem zu begegnen ist es aus der EP 0 359 088 A2 bereits bekannt geworden, am Übergang des Spritzkopfes zum Kalibrierdorn eine Ausgleichskammer auszubilden, die mit Flüssigkeit unter Druck gefüllt ist, welche wiederum ausweichen kann. Überschüssiger Kunststoff kann also in diese Kammer ausweichen. Die Abdichtungsprobleme hierbei sind beträchtlich.

Aus der DE 38 10 915 C1 ist es hierzu bekannt, die in der Formstrecke jeweils paarweise aneinanderliegenden Halbkokillen miteinander starr zu verriegeln, wobei durch Anfahren gegen entsprechende Anschläge die Verriegelung zu Beginn der Formstrecke hergestellt und am Ende der Formstrecke gelöst wird.

Aus der EP 0 240 838 A2 ist eine im Prinzip ähnliche Lösung bekannt, bei der die in der Formstrecke paarweise aneinanderliegenden Halbkokillen durch in diese eingreifende konische Stifte miteinander verriegelt werden. Diese Stifte werden am Ende der Formstrecke wieder herausgezogen.

Der Erfindung liegt die Aufgabe zugrunde, eine Vorrichtung der gattungsgemäßen Art so auszugestalten, daß bei einfachem Aufbau einerseits hohe Schließkräfte auf die Halbkokillen im Bereich der Formstrecke ausgeübt werden können und daß andererseits diese in einfacher Weise aufgehoben werden können.

Diese Aufgabe wird erfindungsgemäß durch die Merkmale des Anspruches 1 gelöst. Die erfindungsgemäß vorgesehenen hydraulisch beaufschlagbaren Kolben-Zylinder-Antriebe sind leicht einstellbar, können leicht geöffnet werden, ermöglichen die Aufbringung extrem hoher Schließkräfte und ermöglichen insbesondere auch eine Notöffnung der Form. Diese lösung ist außerordentlich einfach. Die Einzelheiten hierzu ergeben sich aus den Ansprüchen 2 bis 5. Darüber hinaus kann bei den hydraulisch beaufschlagbaren Kolben-Zylinder-Antrieben während des Betriebes, also während der laufenden Extrusion eines Rohres, der Druck und damit die auf die Halbkokillen wirkende Schließkraft kontinuierlich verändert werden. Dies ist beim Einsatz von Tellerfedern zur Kraft-Beaufschlagung einer Führungsleiste nicht möglich. Bei Tellerfedern muß die Produktion kurzfristig unterbrochen werden, um ein Nachjustieren der Anpreßkräfte zu ermöglichen.

Das Schließen der Form quer zur Produktionsrichtung und parallel zum Maschinentisch mit den angesprochenen extrem hohen Kräften führt - auch bei Zwischenschaltung von Führungsrollen zwischen den Halbkokillen und den Führungseinrichtungen - zu einer Erhöhung der vom Antrieb zu überwindenden Reibungskräfte in der Formstrecke; dies bedingt höhere Antriebsmomente. Dies führt wiederum zu einer Erhöhung der Kippmomente an den jeweils unmittelbar angetriebenen Halbkokillen, so daß die Gefahr besteht, daß in einer Reihe hintereinander befindliche Halbkokillen senkrecht zum Maschinentisch, also in der Vertikalen, geringfügig gegeneinander verschoben werden, was erhebliche Qualitätsnachteile des zu erzeugenden Rohres mit sich bringt. Dem versucht man in der Praxis dadurch zu begegnen, daß die Halbkokillen nicht nur an ihrer Oberseite, sondern auch an ihrer Unterseite mit einer Verzahnung versehen sind, in die ein zweites Antriebsritzel eingreift, wodurch die Gefahr der Kippmomente zumindest reduziert wird. Der Aufwand hierfür ist groß. Eine völlige Kompensation der Kippmomente ist hiermit aber auch nicht möglich. Diesem Problem begegnet die Ausgestaltung nach den Ansprüchen 6 bis 10, weil durch sie wirksam ausgeschlossen wird, daß in einer Reihe hintereinander befindlicher Halbkokillen sich in ihrer Höhenlage zueinander verändern. Obwohl diese Lösung besonders vorteilhaft im Zusammenhang mit der erfindungsgemäßen seitlichen Zusammendrückung der Halbkokillen mittels der hydraulisch beaufschlagbaren Kolben-Zylinder-Antriebe einsetzbar ist, ist sie naturgemäß auch unabhängig hiervon einsetzbar.

Weitere Merkmale, Einzelheiten und Vorteile der Erfindung ergeben sich aus der nachfolgenden Beschreibung eines Ausführungsbeispieles anhand der Zeichnung. Es zeigt
- Fig. 1: eine Vorrichtung zur Herstellung von Kunststoffrohren in Draufsicht,
- Fig. 2: einen Schnitt durch die Vorrichtung gemäß der Schnittlinie II-II in Fig. 1,
- Fig. 3: einen Teilausschnitt gemäß der Schnittlinie III-III in Fig. 2,
- Fig. 4: eine Teildraufsicht auf die Vorrichtung beim Einschwenken zweier Halbkokillen in die Formstrecke,
- Fig. 5: eine Teildraufsicht auf die Formstrecke nach dem Einschwenken der Halbkokillen in die Formstrecke und
- Fig. 6: einen vertikalen Schnitt durch die Vorrichtung gemäß der Schnittlinie VI-VI in Fig. 5.

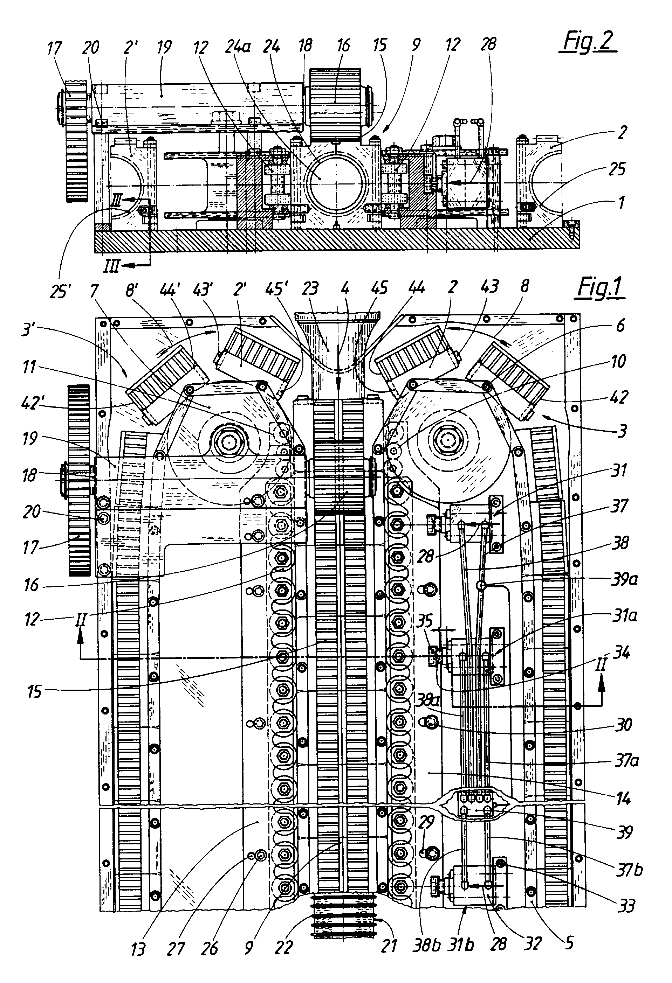

Wie Fig. 1 und 2 erkennen lassen, weist eine Vorrichtung zur Herstellung von Kunststoffrohren mit Querprofilierung einen Maschinentisch 1 auf, auf dem Halbkokillen 2, 2' angeordnet sind, die jeweils zu zwei sogenannten Ketten 3 bzw. 3' miteinander verbunden sind. Hierzu sind an jeder Halbkokille 2 bzw. 2' an ihrem außenliegenden, in Produktionsrichtung 4 vorderen Bereich parallel zueinander angeordnete Laschen 5, 5a mittels eines Anlenkbolzens 6 angelenkt, die an der entsprechenden Stelle der nachfolgenden Halbkokille 2 bzw. 2' ebenfalls mittels eines solchen Anlenkbolzens 6 angebracht sind. Die so gebildeten Ketten 3, 3' sind an ihrem in Produktionsrichtung gesehen rückwärtigen Ende über als sogenannte Einlaufrollen 7 dienende Umlenkräder geführt. Die einzelnen Halbkokillen 2, 2' werden beim Umlauf der Ketten 3, 3' entsprechend den Umlaufrichtungspfeilen 8 bzw. 8' in eine Formstrecke 9 eingeschwenkt, in der jeweils zwei Halbkokillen 2, 2' zu einem Kokillenpaar vereinigt werden, wobei wiederum in Produktionsrichtung 4 hintereinanderfolgende Kokillenpaare dicht an dicht liegen. Um ein schnelles Schließen der Halbkokillen 2, 2' zu einer parallelen und aneinanderliegenden Stellung zu erreichen, sind sogenannte Lenkrollen 10 und Schließrollen 11 vorgesehen, die die in Produktionsrichtung 4 hinteren Enden der Halbkokillen 2, 2' beschleunigt zusammenführen.

In der Formstrecke 9 selber werden die aneinanderliegenden Halbkokillen 2, 2' mittels Führungsrollen 12 gegeneinander gedrückt. Diese sind in jeweils einer in Produktionsrichtung 4 geradlinigen Reihe hintereinander in einer Führungsleiste 13 bzw. einer Führungsleiste 14 gelagert. Am in Produktionsrichtung 4 vorderen Ende des Maschinentisches 1, das in Fig. 1 nicht dargestellt ist, sind ebenfalls als Umlenkräder dienende Rücklaufrollen drehbar gelagert, um die die Ketten 3 bzw. 3' umgelenkt und zu den Einlaufrollen 7 zurückgeführt werden, wie es für derartige Maschinen allgemein bekannt ist, und wie es beispielsweise in der EP 0 301 189 A1 (entsprechend US-Patent 4 900 503) dargestellt und beschrieben ist.

An der Oberseite der Halbkokillen 2, 2' ist eine Verzahnung 15 ausgebildet, wobei die beiden Verzahnungen 15 der einander paarweise zugeordneten Halbkokillen 2, 2' miteinander fluchten, so daß von oben ein gemeinsames Antriebsritzel 16 in diese Verzahnung 15 eingreifen kann, das die Halbkokillen 2, 2' als geschlossene Form durch die Formstrecke 9 schiebt. Der Antrieb dieses Antriebsritzels 16 erfolgt in üblicher Weise von einem nicht dargestellten Motor über ein Antriebszahnrad 17, das auf einer Welle 18 drehfest befestigt ist, die wiederum das drehfest an ihr angebrachte Antriebsritzel 16 trägt. Die Welle 18 ist in einem Lagerbock 19 gelagert, der auf dem Maschinentisch 1 abgestützt und mit letzterem mittels Schrauben 20 fest verbunden ist.

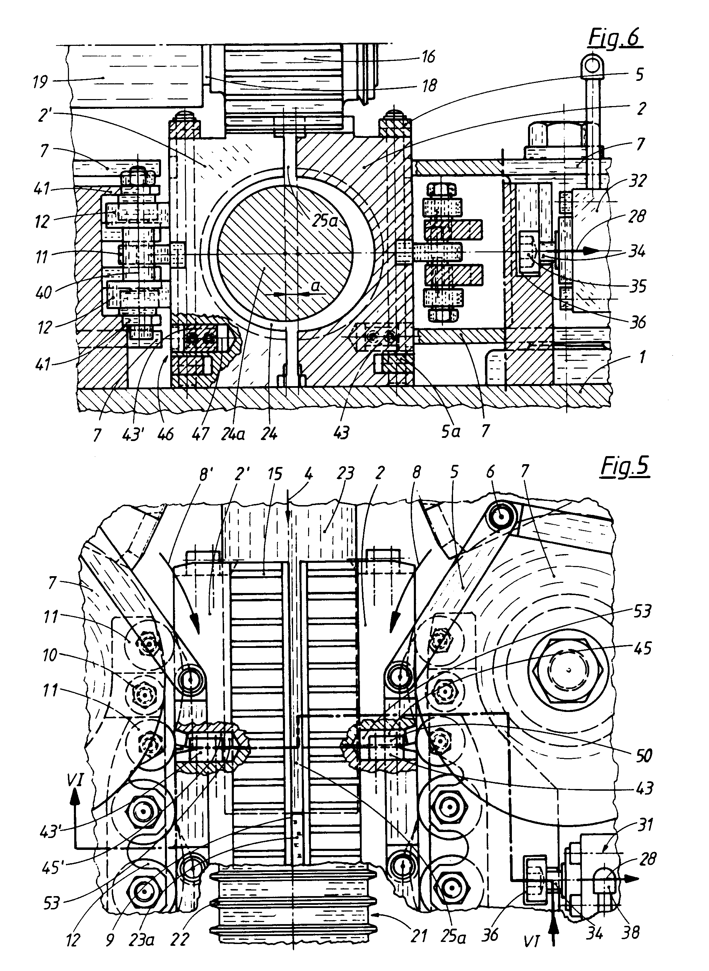

Auf der dargestellten Vorrichtung werden Kunststoff-Rohre 21 mit einer Querprofilierung, d.h. mit über deren Umfang umlaufenden Rippen 22 oder Rillen hergestellt. Hierzu ist ein Extruder vorgesehen, von dem nur der Spritzkopf 23 angedeutet ist, aus dem ein in Fig. 5 angedeuteter Schlauch 23a extrudiert wird, der in noch warmplastischem Zustand in die in der Formstrecke 9 gebildete Form einläuft, in der unter anderem die Ausformung der Rippen 22 durch Vakuumbeaufschlagung des in der Formstrecke 9 ausgebildeten Formraums 24 erfolgt. Die in den Halbkokillen 2, 2' zur Bildung des Formraums 24 ausgeformten Formausnehmungen 25, 25' haben eine zu der Außenform des Rohres 21 komplementäre Form. Sie sind mittels nicht dargestellter Vakuumkanäle an eine Vakuumquelle angeschlossen, wie es im einzelnen in der bereits erwähnten EP 0 301 189 A1 (entsprechend US-Patent 4 900 503) dargestellt und beschrieben ist. Aus dieser Veröffentlichung, auf die insoweit ausdrücklich verwiesen wird, ist es auch bekannt, am Beginn der Formstrecke, also im Anschluß an den Spritzkopf 23, im Formraum 24 einen Kalibrierdorn 24a vorzusehen, zwischen dem und den Formausnehmungen 25, 25' das zu erzeugende Kunststoff-Rohr 21 seine Form, beispielsweise samt Rippen 22 erhält. Zwischen diesem Kalibrierdorn 24a und den Halbkokillen können hohe Drücke auftreten, die ein Auseinanderdrücken paarweise aneinanderliegender Halbkokillen 2, 2' bewirken können.

Die Führungsleiste 13 ist fest mit dem Maschinentisch 1 mittels Schrauben 26 verbunden, wobei in der Führungsleiste 13 zusätzliche Löcher 27 vorgesehen sein können, um eine grundsätzliche Umsetzung und erneute feste Anbringung der Führungsleisten bei einer Änderung der Größe der Halbkokillen 2, 2' zu ermöglichen. Solange Halbkokillen 2, 2' konstanter Außenabmaße verwendet werden, erfolgt kein Umsetzen dieser Führungsleiste 13.

Die andere - in den Fig. 1 und 2 rechts dargestellte - Führungsleiste 14 ist quer zur Produktionsrichtung 4 auf dem Maschinentisch 1, also in der Horizontalen, verschiebbar. Sie ist hierzu mit in der Verschieberichtung 28 verlaufenden Langlöchern 29 versehen, die von am Maschinentisch 1 befestigten Führungsstangen 30 durchsetzt sind, so daß die Führungsleiste 14 auf diesen Führungsstangen 30 in Verschieberichtung 28 verschiebbar ist.

Auf dem Maschinentisch 1 sind insgesamt drei Linearantriebe in Form von hydraulisch beaufschlagbaren Kolben-Zylinder-Antrieben 31, 31a, 31b befestigt, deren Zylinder 32 mittels Schrauben 33 auf dem Maschinentisch 1 angebracht ist. Ihre jeweilige Kolbenstange 34 trägt an ihrem freien Ende einen Druckkopf 35, der in eine nach oben offene im Querschnitt T-förmige Ausnehmung 36 in der Führungsleiste 14 eingreift. Je nach Antriebsrichtung des Kolben-Zylinder-Antriebs 31, 31a, 31b kann daher die Führungsleiste entweder in Richtung auf die Halbkokillen 2 hingeschoben oder von diesen weggezogen werden. Hierzu sind die Antriebe 31, 31a, 31b als doppeltwirkende Kolben-Zylinder-Antriebe ausgebildet, in die jeweils zwei Hydraulikleitungen 37, 38, 37a, 38a, 37b, 38b einmünden, die an einem zentralen Steuerventil-Block 39 zusammengefaßt sind. Die Kolben-Zylinder-Antriebe 31, 31a, 31b sind als Kurzhub-Antriebe ausgebildet, deren maximaler Hub im Bereich zwischen 10 bis 20 mm, in der Regel 15 mm, beträgt. Ein solcher Hub reicht aus, um im Falle einer Störung durch Überdruck in der Form ein Öffnen der Form durch Ansteuerung des Steuerventil-Blocks 39 eine entsprechende Beaufschlagung der Antriebe 31, 31a, 31b und dadurch ein Zurückfahren der Führungsleiste 14 zu ermöglichen. Hierzu ist in der Hydraulikleitung 37 ein Druckgeber 39a vorgesehen, der auf den Steuerventil-Block 39 geschaltet ist.

Ein Öffnungsspalt 25a mit der Spaltweite a von wenigen Millimetern ist in den Fig. 5, 6 erkennbar.

Wie Fig. 1 entnehmbar ist, greift der in Produktionsrichtung 4 erste Kolben-Zylinder-Antrieb 31 im Bereich des ersten oder zweiten geschlossenen Paares von Halbkokillen 2, 2' unmittelbar hinter den Einlaufrollen 7 an der Führungsleiste 14 an. Der in Produktionsrichtung 4 zweite Antrieb 31a greift in relativ geringem Abstand zum ersten Antrieb 31 an der Fühningsleiste 14 an, und zwar etwa im Bereich des vierten Paares von Halbkokillen 2, 2'. Der in Produktionsrichtung 4 dritte Antrieb 31b greift in erheblich größerem Abstand an. Die Anordnung der Mehrzahl der Antriebe 31, 31a am Beginn der Formstrecke 9, und zwar im Bereich des Kalibrierdorns 24a, ist darauf zurückzuführen, daß hier die größten Druckkräfte innerhalb der Form auftreten, während in Produktionsrichtung 4 weiter hinten im Formraum 25 kaum noch nach außen wirkende Kräfte auftreten. Der dort befindliche Antrieb 31b dient primär einer Verschiebung der Führungsleiste 14 parallel zu sich selber. Da die auf die Führungsleisten 13, 14 wirkenden Kräfte extrem groß sein können, kann es zweckmäßig sein, die Führungsleisten 13, 14 über die Halbkokillen 2, 2' in der Formstrecke 9 hinweg mit einem Querholm zu verbinden, der mittels Zugankern mit dem Maschinentisch 1 verbunden wird. Dadurch würde eine Art Rahmenkonstruktion geschaffen, die in sich sehr steif ist.

In den Fig. 2 und 6 ist auch die Lagerung der Führungsrollen 12 erkennbar. Sie sind jeweils paarweise auf einer Achse 40 angebracht und in von der jeweiligen Führungsleiste 13 bzw. 14 vorspringenden Lagerflanschen 41 gelagert.

Jeweils an einer Stirnseite 42 bzw. 42' jeder Halbkokille 2 bzw. 2', und zwar an der in Produktionsrichtung 4 nacheilenden Stirnseite 42 bzw. 42' ist ein Verriegelungskörper 43 bzw. 43' angebracht. In der jeweils anderen, also in Produktionsrichtung 4 voreilenden Stirnseite 44, 44' jeder Halbkokille 2, 2' ist eine dem Verriegelungskörper 43 bzw. 43' angepaßte Verriegelungsausnehmung 45, 45' ausgebildet. Der Zweck der hierdurch gebildeten Verriegelungen 46 ist es, die jeweils in einer Kette 3 zw. 3' hintereinanderfolgenden Halbkokillen 2 bzw. 2' zumindest in der Formstrecke 9 derart miteinander zu verriegeln, daß ihre Höhenlage, d.h. ihre Lage senkrecht zur Ebene des Maschinentisches 1 zueinander fixiert ist.

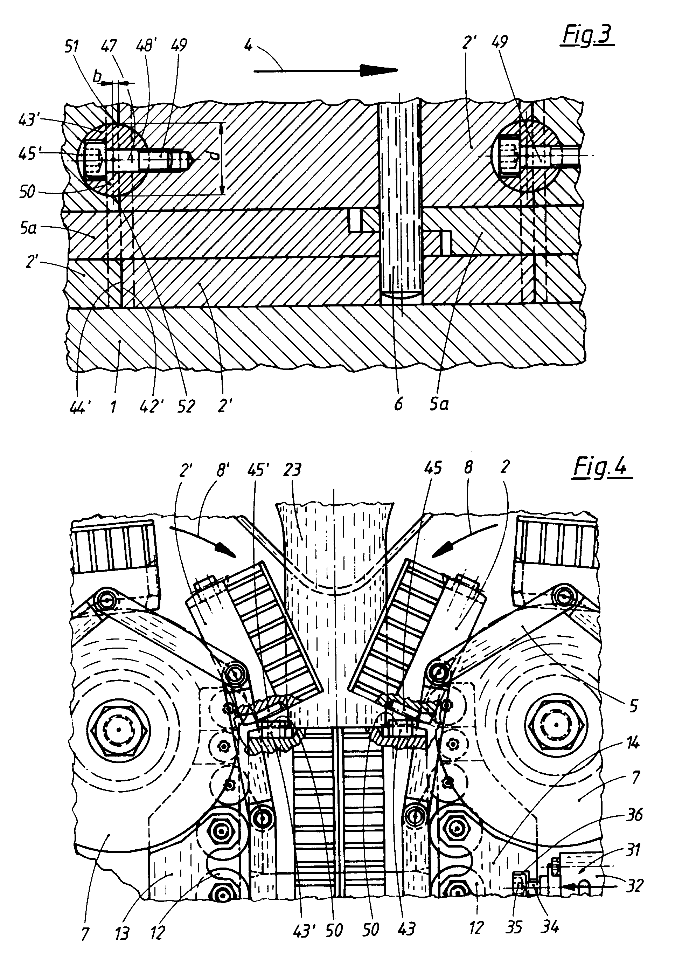

Die Verriegelungskörper 43 bzw. 43' haben den Querschnitt eines sich über mehr als 180° erstreckenden Zylinders mit einem Durchmesser d, deren Achse 47 sich quer zur Produktionsrichtung 4, parallel zum Maschinentisch 1, also in Verschieberichtung 28 erstreckt, wie Fig. 6 entnehmbar ist. Sie sind in einer angepaßten etwa halbzylindrischen Aufnahme 48 bzw. 48' in der zugeordneten Stirnseite 42 bzw. 42' angeordnet und mit versenkten Schrauben 49 an der jeweiligen Halbkokille 2 bzw. 2' befestigt, so daß sie über die jeweilige in Produktionsrichtung 4 nacheilende Stirnseite 42 bzw. 42' mit einem teilzylindrischen Verriegelungsabschnitt 50 vorstehen. Wie Fig. 3 entnehmbar ist, ergänzen sich die jeweilige Verriegelungsausnehmung 45 bzw. 45' mit der jeweiligen Aufnahme 48 bzw. 48' zu einem Zylinder, dessen mit der jeweiligen Achse 47 zusammenfallende Achse etwas vor den die Verriegelungsabschnitte 50 aufweisenden Stirnseiten 42 bzw. 42' liegt. Dieser Versatz b der Achse 47 gegenüber den beiden bei geschlossener Form aneinanderliegenden Stirnseiten 42, 44 bzw. 42', 44' führt dazu, daß der Verriegelungsabschnitt 50 sich in der ihn aufnehmenden Verriegelungsausnehmung 45 bzw. 45' an seiner Oberseite 51 und seiner Unterseite 52 fest verkeilt. Dies führt dazu, daß auch nach langem Betrieb in die Verriegelung 46 kein vertikales Spiel kommt. Der Versatz b der Achse 47 gegenüber den Stirnseiten 42, 44, 42', 44' ist sehr klein. Für ihn gilt im Verhältnis zum Durchmesser d der Verriegelungskörper 43 bzw. 43' die Beziehung 12 < d/b < 15. Insbesondere gilt d/b ≈ 14.

In Verschieberichtung 28 haben die Verriegelungsabschnitte 50 jeweils deutliches Spiel 53 in der jeweiligen Verriegelungsausnehmung 45 bzw. 45', so daß das Einführen der Verriegelungsabschnitte 50 in die jeweilige Verriegelungsausnehmung 45 bzw. 45' beim Einschwenken der Halbkokillen 2 bzw. 2' in die Formstrecke 9 möglich ist, ohne daß Beschädigungen auftreten.

Durch die geschilderte Verriegelung 46 werden die Kippmomente aufgefangen, die durch das Antriebsritzel 16 auf die jeweils mit ihm in Eingriff befindlichen Halbkokillen 2, 2' ausgeübt werden. Ein Verschieben hintereinander befindlicher Halbkokillen 2 bzw. 2' in ihrer Höhenlage gegeneinander ist also ausgeschlossen. Die Verriegelung 46 wird insbesondere vorteilhaft bei Halbkokillen 2, 2' zur Herstellung von Rohren 21 mit verhältnismäßig großem Durchmesser, beispielsweise von Rohren mit einem Durchmesser ab 200 mm eingesetzt. Sie wirkt absolut zuverlässig auch bei Einsatz nur eines Antriebes von oben und macht insbesondere den Einsatz eines Antriebes von oben und eines Antriebes von unten, wie es bekannt ist, überflüssig.

## Patentansprüche

1. Vorrichtung zum Herstellen eines Kunststoff-Rohres (21) mit einer Querprofilierung, insbesondere Rippen (22),
- mit einem Maschinentisch (1),
- mit auf dem Maschinentisch (1) angeordneten und in zwei endlosen Reihen geführten Halbkokillen (2, 2'),
- mit einem Antrieb zur umlaufenden Fortbewegung der Reihen von Halbkokillen (2, 2'),
- mit einer Formstrecke (9), in der jeweils eine Halbkokille (2 bzw. 2') aus jeder Reihe ein Paar bilden und in Produktionsrichtung (4) von dem Antrieb angetrieben werden, wobei in Produktionsrichtung (4) hintereinander befindliche Halbkokillen (2 bzw. 2') mit einer ersten Stirnseite (42 bzw. 42') an einer zweiten Stirnseite (44 bzw. 44') einer benachbarten Halbkokille (2 bzw. 2') dicht anliegen und einen Formraum (24) begrenzen, und
- mit die Formstrecke (9) seitlich begrenzenden Führungseinrichtungen (13, 14) zum Zusammenpressen der Paare von Halbkokillen (2 bzw. 2') in zum Maschinentisch (1) paralleler und zur Produktionsrichtung (4) rechtwinkliger Richtung, wobei mindestens eine Führungseinrichtung (14) in einer Verschieberichtung (28) verschiebbar geführt und mit Druckeinrichtungen beaufschlagt ist,
dadurch gekennzeichnet, daß die Druckeinrichtungen durch hydraulisch beaufschlagbare Kolben-Zylinder-Antriebe (31, 31a, 31b) gebildet sind.

2. Vorrichtung nach Anspruch 1, dadurch gekennzeichnet, daß die Kolben-Zylinder-Antriebe (31, 31a, 31b) doppeltwirkend ausgebildet sind.

3. Vorrichtung nach Anspruch 1 oder 2, dadurch gekennzeichnet, daß die Kolben-Zylinder-Antriebe (31, 31a, 31b) mit der Führungseinrichtung (14) in Verschieberichtung (28) verriegelt sind.

4. Vorrichtung nach einem der Ansprüche 1 bis 3, dadurch gekennzeichnet, daß die Kolben-Zylinder-Antriebe (31, 31a, 31b) als Kurzhub-Antriebe mit einem Hub von 10 bis 20 mm ausgebildet sind.

5. Vorrichtung nach einem der Ansprüche 1 bis 4, dadurch gekennzeichnet, daß die Kolben-Zylinder-Antriebe (31, 31a, 31b) bei Überdruck im Formraum (24) die Führungseinrichtung (14) von der Formstrecke (9) wegziehen.

6. Vorrichtung nach einem der Ansprüche 1 bis 5, dadurch gekennzeichnet, daß Verriegelungen (46) vorgesehen sind, mittels derer in einer Reihe hintereinander befindliche Halbkokillen (2 bzw. 2') in der Formstrecke (9) rechtwinklig zum Maschinentisch (1) miteinander verbindbar sind.

7. Vorrichtung nach Anspruch 6, dadurch gekennzeichnet, daß jede Verriegelung (46) einen von der ersten Stirnseite (42 bzw. 42') einer Halbkokille (2 bzw. 2') vortagenden Verriegelungsabschnitt (50) und eine in der zweiten Stirnseite (44 bzw. 44') einer benachbarten Halbkokille (2 bzw. 2') ausgebildete Verriegelungsausnehmung (45, 45') umfaßt, wobei der Verriegelungsabschnitt (50) in der Formstrecke (9) in die Verriegelungsausnehmung (45, 45') eingreift.

8. Vorrichtung nach Anspruch 7, dadurch gekennzeichnet, daß der Verriegelungsabschnitt (50) in der Form eines Zylinder-Abschnitts ausgebildet ist, dessen Achse (47) parallel zum Maschinentisch (1) und parallel zur ersten Stirnseite (42, 42') verläuft und daß die Verriegelungsausnehmung (45 bzw. 45') dem Verriegelungsabschnitt (50) angepaßt ist.

9. Vorrichtung nach Anspruch 8, dadurch gekennzeichnet, daß die Achse (47) des Verriegelungsabschnittes (50) gegenüber der ersten Stirnseite (42, 42') nach außen um einen Versatz (b) verlegt ist.

10. Vorrichtung nach einem der Ansprüche 6 bis 9, dadurch gekennzeichnet, daß der Verriegelungsabschnitt (50) Teil eines zylinderabschnittsförmigen Verriegelungskörpers (43 bzw. 43') und in einer in der ersten Stirnseite (42 bzw. 42') jeder Halbkokille (2 bzw. 2') ausgebildeten Aufnahme (48 bzw. 48') angeordnet ist und daß die Aufnahme (48 bzw. 48') in der ersten Stirnseite (42 bzw. 42') und die Verriegelungsausnehmung (45 bzw. 45') in der zweiten Stirnseite (44 bzw. 44') gemeinsam einen Hohlzylinder bilden, dessen Achse mit der Achse (47) der Verriegelungsabschnitts (50) identisch ist.

## Claims

1. Apparatus for the manufacture of a plastic pipe having transverse profile features, in particular ribs (22),
- with a machine bed (1),
- with half shells (2, 2') arranged on the machine bed (1) and guided in two continuous series,
- with a drive for the continuously revolving movement of the series of half shells (2, 2'),
- with a molding path (9), on which in each case one half shell (2 and 2', respectively) from each series form a pair and are driven by the drive in the direction (4) of production, half shells (2 and 2', respectively) located one behind the other in the direction (4) of production closely resting with a first front end (42 and 42', respectively) against a second front end (44 and 44', respectively) of an adjacent half shell (2 and 2', respectively) and defining a molding chamber (24), and
- with guide devices (13, 14) laterally defining the molding path (9) for pressing the pairs of half shells (2 and 2', respectively) together in a direction parallel to the machine bed (1) and at right angles to the direction (4) of production, at least one guide device (14) being displaceably guided in a direction (28) of displacement and being acted upon by pressure devices,
characterized in that the pressure devices are hydraulically actuatable piston-cylinder drives (31, 31a, 31b).

2. Apparatus according to claim 1, characterized in that the piston-cylinder drives (31, 31a, 31b) are double-acting.

3. Apparatus according to claim 1 or 2, characterized in that the piston-cylinder drives (31, 31a, 31b) are in locking engagement with the guide device (14) in the direction (28) of displacement.

4. Apparatus according to one of the claims 1 to 3, characterized in that the piston-cylinder drives (31, 31a, 31b) are short-stroke drives with a stroke of 10 to 20 mm.

5. Apparatus according to one of the claims 1 to 4, characterized in that upon overpressure in the molding chamber (24), the piston-cylinder drives (31, 31a, 31b) move the guide device (14) away from the molding path (9).

6. Apparatus according to one of the claims 1 to 5, characterized in that interlockings (46) are provided by means of which half shells (2 and 2', respectively) situated one behind the other in series are connectable with each other on the molding path (9) at right angles to the machine bed (1).

7. Apparatus according to claim 6, characterized in that each interlocking (46) comprises a locking section (50) projecting from the first front end (42 and 42', respectively) of a half shell (2 and 2', respectively) and a locking recess (45, 45') formed in the second front end (44 and 44', respectively) of an adjacent half shell (2 and 2', respectively), the locking section (50) engaging with the locking recess (45, 45') on the molding path (9).

8. Apparatus according to claim 7, characterized in that the locking section (50) is in the form of a cylinder segment of which the axis (47) extends parallel to the machine bed (1) and parallel to the first front end (42, 42') and in that the locking recess (45 and 45', respectively) is suited to match the locking section (50).

9. Apparatus according to claim 8, characterized in that the axis (47) of the locking section (50) is displaced outwards by a misalignment (b) referred to the first front end (42, 42').

10. Apparatus according to one of the claims 6 to 9, characterized in that the locking section (50) is part of a locking member (43 and 43', respectively) in the shape of a cylinder segment and is arranged in an accommodation (48 and 48', respectively) formed in the first front end (42 and 42', respectively) of each half shell (2 and 2', respectively), and in that the accommodation (48 and 48', respectively) in the first front end (42 and 42', respectively) and the locking recess (45 and 45', respectively) in the second front end (44 and 44', respectively) in common form a hollow cylinder of which the axis is identical with the axis (47) of the locking section (50).

## Revendications

1. Dispositif pour la fabrication d'un tuyau en matière plastique (21) à profilage transversal, en particulier à nervures (22), comprenant
- une table de machine (1),
- des demi-coquilles (2, 2') disposées sur la table (1) de la machine et guidées sur deux files continues,
- un dispositif d'entraînement pour assurer le déplacement circulaire des files de demi-coquilles (2, 2'),
- un trajet de moulage (9), sur lequel des demi-coquilles (2, 2') de chacune des files forment des paires et sont entraînées dans la direction de production (4) par le dispositif d'entraînement, les demi-coquilles (2, 2') situées les unes derrière les autres dans la direction de production (4) étant appliquées de manière jointive, par une première face frontale (42, 42'), contre une seconde face frontale (44, 44') d'une demi-coquille voisine (2, 2') et délimitant une chambre de moulage (24), et
- des dispositifs de guidage (13, 14) qui délimitent latéralement le trajet de moulage (9) et servent à comprimer les paires de demi-coquilles (2, 2') dans une direction parallèle à la table (1) de la machine et perpendiculaire à la direction de production (4), au moins un dispositif de guidage (14) étant guidé de manière déplaçable dans une direction de déplacement (28) et étant sollicité par des dispositifs de pression,
caractérisé en ce que les dispositifs de pression sont formés par des dispositifs d'entraînement à piston-cylindre à sollicitation hydraulique (31, 31a, 31b).

2. Dispositif selon la revendication 1, caractérisé en ce que les dispositifs d'entraînement à piston-cylindre (31, 31a, 31b) sont à double effet.

3. Dispositif selon la revendication 1 ou 2, caractérisé en ce que les dispositifs d'entraînement à pis-ton-cylindre (31, 31a, 31b) sont verrouillés avec le dispositif de guidage (14) dans la direction de déplacement (28).

4. Dispositif selon l'une des revendications 1 à 3, caractérisé en ce que les dispositifs d'entraînement à piston-cylindre (31, 31a, 31b) sont conçus sous la forme de dispositifs d'entraînement à faible course possédant une course de 10 à 20 mm.

5. Dispositif selon l'une des revendications 1 à 4, caractérisé en ce que les dispositifs d'entraînement à piston-cylindre (31, 31a, 31b) éloignent le dispositif de guidage (14) du trajet de moulage (9) en présence d'une surpression dans la chambre de moulage (24).

6. Dispositif selon l'une des revendications 1 à 5, caractérisé en ce qu'il est prévu des dispositifs de verrouillage (46) permettant de relier entre elles des demi-coquilles (2, 2'), situées les unes derrière les autres sur une file, sur le trajet de moulage (9), perpendiculairement à la table (1) de la machine.

7. Dispositif selon la revendication 6, caractérisé en ce que chaque dispositif de verrouillage (46) comprend une portion de verrouillage (50), qui dépasse d'une première face frontale (42, 42') d'une demi-coquille (2, 2'), et un évidement de verrouillage (45, 45'), qui est ménagé dans la seconde face frontale (44, 44') d'une demicoquille voisine (2, 2'), la portion de verrouillage (50) pénétrant dans l'évidement de verrouillage (45, 45') sur le trajet de moulage (9).

8. Dispositif selon la revendication 7, caractérisé en ce que la portion de verrouillage (50) est conçue sous la forme d'une portion cylindrique dont l'axe (47) est parallèle à la table (1) de la machine et parallèle à la première face frontale (42, 42'), et en ce que l'évidement de verrouillage (45, 45') est adapté à la portion de verrouillage (50).

9. Dispositif selon la revendication 8, caractérisé en ce que l'axe (47) de la portion de verrouillage (50) est déporté vers l'extérieur selon un écart (b) par rapport à la première face frontale (42, 42').

10. Dispositif selon l'une des revendications 6 à 9, caractérisé en ce que la portion de verrouillage (50) fait partie d'un corps de verrouillage (43, 43') en forme de portion cylindrique et est disposée dans un logement (48, 48') ménagé dans la première face frontale (42, 42') de chaque demi-coquille (2, 2'), et en ce que le logement (48, 48') ménagé dans la première face frontale (42, 42') et l'évidement de verrouillage (45, 45') ménagé dans la seconde face frontale (44, 44') forment ensemble un cylindre creux dont l'axe coïncide avec l'axe (47) de la portion de verrouillage (50).
